# EUROPÄISCHE PATENTANMELDUNG

(11) **EP 2 995 781 A1**
(43) Veröffentlichungstag der Anmeldung: **16.03.2016**
(21) Anmeldenummer: 15183180.7
(22) Anmeldetag: 31.08.2015
(51) Int. Cl.: F01D 25/18, F16N 19/00, F01M 13/04

(54) **TANKVORRICHTUNG EINES FLUGTRIEBWERKS MIT EINER EINRICHTUNG ZUM EINLEITEN VON ÖL**

(30) Priorität: 11.09.2014 DE 102014113128
(71) Anmelder: Rolls-Royce Deutschland Ltd & Co KG, 15827 Blankenfelde-Mahlow (DE)
(72) Erfinder: Beier, Jürgen, 15732 Schulzendorf (DE); Venter, Gideon, 14165 Berlin (DE)
(74) Vertreter: Schmidt, Martin Michael

(57) **Zusammenfassung**

Es wird eine Tankvorrichtung (18) eines Flugtriebwerks (1) beschrieben, welche eine Einlasseinrichtung (30) zur Zuführung eines Luft-Öl-Volumenstroms in einen Tankraum (31) der Tankvorrichtung (18), eine Abscheideeinrichtung (32) zur Abscheidung von Öl aus dem dem Tankraum (31) zugeführten Luft-Öl-Volumenstrom, einen von wenigstens einer Wandung (37) begrenzten Leitungsbereich (38), in welchem ein Luft-Öl-Volumenstrom im Bereich des Tankraums (31) zumindest bereichsweise führbar ist, und eine Auslasseinrichtung (40) aufweist, in deren Bereich ein Volumenstroms über eine Ventileinrichtung (41) aus dem Tankraum (31) der Tankvorrichtung (18) abführbar ist. Es ist wenigstens eine Einrichtung (43) zum Einleiten von Öl vorgesehen, mittels welcher Öl im Wesentlichen entgegen einer sich im Betrieb ausbildenden Strömungsrichtung des Luft-Öl-Volumenstroms in dem Leitungsbereich (38) im Bereich des Leitungsbereichs (38) einleitbar ist.

## Beschreibung

Die Erfindung betrifft eine Tankvorrichtung eines Flugtriebwerks mit einer Einlasseinrichtung, einer Abscheideeinrichtung, einem Leitungsbereich und einer Auslasseinrichtung gemäß der im Oberbegriff des Patentanspruches 1 näher definierten Art.

Bei aus der Praxis bekannten Strahltriebwerken wird im Betrieb ölhaltige Verbrauchsluft einem Öltank zugeführt, um Öl aus dem zugeführten Luft-Öl-Gemisch abzuscheiden. Im Bereich des Öltanks ist hierzu ein im Einbauzustand der Tankvorrichtung im Wesentlich vertikal ausgerichteter und von einem Wandungsbereich begrenzter Zyklon vorgesehen, dem das Luft-Öl-Gemisch in einem oberen Bereich tangential zum Wandungsbereich zugeführt wird. Das Luft-Öl-Gemisch durchläuft den Zyklon aufgrund von Zentrifugalkräften spiralförmig von oben nach unten. Dabei werden an dem Wandungsbereich des Zyklons hauptsächlich größere Öltropfen des Luft-Öl-Gemischs durch die auftretenden Fliehkräfte abgeschieden. Im Bereich einer Mittelachse des Zyklons strömt ein Volumenstrom nach oben, der mit im Bereich des Zyklons nicht abgeschiedenen, insbesondere kleinen Öltropfen und weiteren Öltropfen verschiedener Größen beladen ist, die der aufsteigende Volumenstrom bei der Aufwärtsbewegung innerhalb des Wandungsbereichs aus dem spiralförmig bewegten Luft-Öl-Volumenstrom aufnimmt. Der im Bereich der Mittelachse des Zyklons aufsteigende Volumenstrom wird einem von einer separaten Wandung begrenzten Leitungsbereich zugeführt, der in einem Einbauzustand der Tankvorrichtung im Wesentlichen vertikal verläuft. Bezüglich der Strömungsrichtung des Volumenstroms stromab einer Einlassöffnung für den Volumenstrom ist der Leitungsbereich mit einer ein Druckbegrenzungsventil aufweisenden Auslassöffnung der Tankvorrichtung gekoppelt.

Der aus der Tankvorrichtung abgeführte Volumenstrom wird einem Ölabscheider bzw. einem sogenannten Breather, der als Zentrifugalölabscheider ausgeführt sein kann, zugeführt, um in dessen Bereich Öltropfen aus dem aus der Tankvorrichtung abgeführten Volumenstrom abzuscheiden. Die Separierung großer Ölpartikel aus diesem Volumenstrom erfolgt über einen im Bereich des Breathers vorgesehenen und als Zentrifuge wirkenden Umlenkbereich. Ölpartikel mit kleineren Durchmessern werden durch einen im Ölabscheider angeordneten Metallschaum aufgefangen und so ebenfalls aus dem Volumenstrom gefiltert. Das im Bereich des Ölabscheiders abgeschiedene Öl wird anschließend wieder dem Öltank eines Ölkreislaufs zugeführt. Die gereinigte Luft wird über Bord an die Umwelt abgegeben.

Die kleinen Öltropfen sind allerdings aufgrund ihrer geringen Größe im Bereich des Zentrifugalabscheiders nur bedingt abscheidbar, weshalb über einen Auslass des Ölabscheiders für den Luftstrom ein unerwünscht großer Anteil an Öl in die Umwelt gelangt, was unter anderem einen hohen Ölverbrauch heutiger Triebwerke verursacht. Ein nicht unerheblicher Teil der dem Ölabscheider zugeführten kleinen Öltropfen wird diesem mit dem Volumenstrom aus der Tankvorrichtung zugeführt. Die kleinen Öltropfen in dem aus der Tankvorrichtung ausströmenden Volumenstrom entstehen größtenteils im Bereich eines Druckbegrenzungsventils der Tankvorrichtung, das durch ein dynamisches Verhalten mit schnell aufeinanderfolgenden Öffnungs- und Schließvorgängen gekennzeichnet ist. Im Betrieb des Flugtriebwerks werden daher große Öltropfen im Bereich der Auslassöffnung in kleine Öltropfen aufgespalten.

Es ist Aufgabe der vorliegenden Erfindung, eine Tankvorrichtung der eingangs genannten Art zu schaffen, bei der die Anzahl von kleinen Öltropfen in einem aus der Tankvorrichtung abgeführten Volumenstrom gering ist.

Erfindungsgemäß wird diese Aufgabe mit einer Tankvorrichtung mit den Merkmalen des Patentanspruches 1 gelöst.

Die erfindungsgemäße Tankvorrichtung eines Flugtriebwerks weist eine Einlasseinrichtung zur Zuführung eines Luft-Öl-Volumenstroms in einen Tankraum der Tankvorrichtung, eine Abscheideeinrichtung zur Abscheidung von Öl aus dem dem Tankraum zugeführten Luft-Öl-Volumenstrom, einen von wenigstens einer Wandung begrenzten Leitungsbereich, in dessen Bereich ein Luft-Öl-Volumenstrom im Bereich des Tankraums zumindest bereichsweise führbar ist, und eine Auslasseinrichtung auf, in deren Bereich ein Volumenstrom über eine Ventileinrichtung aus dem Tankraum der Tankvorrichtung abführbar ist.

Erfindungsgemäß ist wenigstens eine Einrichtung zum Einleiten von Öl vorgesehen, mittels welcher Öl im Wesentlichen entgegen einer sich im Betrieb ausbildenden Strömungsrichtung des Luft-Öl-Volumenstroms in dem Leitungsbereich im Bereich des Leitungsbereichs einleitbar ist.

Bei einer erfindungsgemäßen Tankvorrichtung vereinigen sich bei einem Aufeinandertreffen der Öltropfen des Luft-Öl-Volumenstroms mit dem über die Einrichtung zum Einleiten von Öl im Bereich des Leitungsbereichs eingeleiteten Öl das eingeleitete Öl und die Öltropfen des Luft-Öl-Volumenstroms zu größeren Öltropfen. Diese vergrößerten Öltropfen werden im Betrieb gegenüber der Bewegungsrichtung des Luft-Öl-Volumenstroms durch die über die Einrichtung eingeleiteten Öltropfen im Wesentlichen um 180° umgelenkt und setzen sich durch eine Einwirkung von Zentrifugalkräften und Schwerkrafteinflüssen vorzugsweise an einem Wandungsbereich der Tankvorrichtung ab. Dabei vereinigen sich diese Öltropfen mit einem sich im Bereich dieses Wandungsbereich der Tankvorrichtung im Betrieb ausbildenden Ölfilm. Der der Auslasseinrichtung zugeführte Volumenstrom ist gegenüber Volumenströmen, die aus an sich bekannten Tankvorrichtungen ausströmen, durch eine reduzierte Beladung mit Öl und eine geringere Öltropfenanzahl gekennzeichnet. Dies führt dazu, dass durch das dynamische Verhalten der Ventileinrichtung weniger kleine Öltropfen entstehen.

Durch die über die Einrichtung zum Einleiten von Öl im Wesentlichen entgegen der Strömungsrichtung des Luft-Öl-Volumenstroms gerichtete Einleitung von Öl ist eine Vereinigung zwischen dem Luft-Öl-Volumenstrom im Leitungsbereich mit geführten Öltropfen und dem vor die Einrichtung eingeleiteten Öl besonders effektiv, da ein Koaleszieren bei großer Relativgeschwindigkeit zwischen den im Leitungsbereich strömenden Öltropfen des Luft-Öl-Volumenstroms und dem über die Einrichtung eingeleiteten Öl begünstigt ist. Die Bereitschaft zum Koaleszieren von Öltropfen des Luft-Öl-Gemischs mit dem eingeleiteten Öl zu größeren Öltropfen kann weiterhin auch dadurch erhöht werden, dass das eingeleitete Öl eine gegenüber dem Luft-Öl-Gemisch deutlich geringere Temperatur aufweist.

Durch die Einrichtung zum Einleiten von Öl in den Luft-Öl-Volumenstrom im Leitungsbereich wird eine Beladung von aus der Tankvorrichtung ausströmender Luft mit Öl auf einfache und wirkungsvolle Art und Weise verringert und damit einhergehend die Bildung kleiner, im Bereich eines Ölabscheiders nur bedingt abscheidbarer Öltropfen reduziert, ohne Leistungseigenschaften der Tankvorrichtung noch der Ventileinrichtung zu beeinträchtigen.

Bei einer vorteilhaften Ausführung der erfindungsgemäßen Tankvorrichtung ist es vorgesehen, dass die Einrichtung zum Einleiten von Öl innerhalb der wenigstens einen Wandung des Leitungsbereichs angeordnet ist. Durch eine derartige Anordnung der Einrichtung zum Einleiten von Öl in einem von der Wandung des Leitungsbereichs begrenzten Raum ist auf einfache Weise ein großer Teil der Öltropfen in dem in dem Leitungsbereich geführten Luft-Öl-Volumenstrom über die Einrichtung mit Öl beaufschlagbar und verbindet sich mit diesem zu großen, im Bereich der Tankvorrichtung effektiv aus dem Luft-Öl-Volumenstrom abscheidbaren Öltropfen.

Alternativ oder zusätzlich hierzu kann eine Einrichtung zum Einleiten von Öl auch außerhalb des Leitungsbereichs angeordnet sein, wobei Öl über die Einrichtung zum Einleiten von Öl dann in Richtung einer Auslassöffnung des Leitungsbereiches einleitbar ist. Auch bei einer derartigen Anordnung der Einrichtung kann ein Großteil der Öltropfen des im Leitungsbereich geführten Luft-Öl-Volumenstroms mit über die Einrichtung eingeleitetem Öl vereinigt werden. Die großen Öltropfen sind im Vergleich zu den kleineren Öltropfen durch eine größere Abscheideaffinität im Inneren des Tankraums gekennzeichnet. Zusätzlich wird das Abscheiden der größeren Öltropfen auch dadurch begünstigt, dass die durch das Aufeinandertreffen kleinerer Öltropfen entstehenden großen Öltropfen nach dem Koaleszieren in Richtung der Wandung strömen und vor Erreichen der Auslasseinrichtung im Bereich der Wandung abgeschieden werden.

Bei einer konstruktiv einfachen Ausführung der Tankvorrichtung ist die wenigstens eine Einrichtung zum Einleiten von Öl an einer Außenwand des Tankraums angeordnet.

Der zur Führung des Luft-Öl-Volumenstroms vorgesehene Leitungsbereich ist in konstruktiv einfacher Ausgestaltung wenigstens abschnittsweise zumindest annähernd zylinderförmig ausgeführt. Grundsätzlich kann der Leitungsbereich aber auch einen anderen geeigneten Querschnitt aufweisen.

Wenn der Leitungsbereich im Einbauzustand der Tankvorrichtung zur Führung des sich im Betrieb ausbildenden Luft-Öl-Volumenstroms im Wesentlichen in vertikaler Richtung verläuft, ist eine Abscheidewirkung der durch Koaleszieren des Öls des Luft-Öl-Volumenstroms und des über die Einrichtung eingeleiteten Öls gebildeten Öltropfen aus dem Luft-Öl-Volumenstrom vorteilhafterweise besonders groß, da die Schwerkraft eine Umlenkung der vereinigten Öltropfen gegenüber der Bewegungsrichtung der Öltropfen des Luft-Öl-Volumenstroms in Richtung der Wandung hierbei besonders wirksam unterstützt.

Das Öl ist über die wenigstens eine Einrichtung zum Einleiten von Öl bei einer vorteilhaften Ausführung der erfindungsgemäßen Tankvorrichtung in Form eines Sprühkegels in den Leitungsbereich oder im Bereich einer Auslassöffnung des Leitungsbereichs im Wesentlichen entgegen einer Strömungsrichtung des Luft-Öl-Volumenstroms in den Luft-Öl-Volumenstrom einleitbar, wobei Öltropfen des eingeleiteten Öls vorzugsweise eine Tropfengröße von größer als 50 µm aufweisen. Über den insbesondere auf die Wandung des Leitungsbereichs auftreffenden Sprühkegel, der eine im Wesentlichen entgegengesetzt zu einer Strömungsrichtung des Luft-Öl-Volumenstroms gerichtete Haupteinsprührichtung aufweist, wird auf einfache Weise ein Zusammentreffen von Öl der Einrichtung zum Einleiten von Öl mit einer großen Anzahl von Öltropfen in dem Luft-Öl-Volumenstrom erzielt, so dass ein großer Anteil der Öltropfen des Luft-Öl-Volumenstroms mit dem eingeleiteten Öl zu gewünscht großen Öltropfen vereinigt wird. Die Einrichtung zum Einleiten von Öl kann hierzu beispielsweise als Nebeldüse ausgeführt sein, um vorzugsweise einen kegelförmigen Ölsprühnebel bzw. einen diffusen Luft-Öl-Nebel zu erzeugen. Der Ölsprühnebel besteht aus Tropfen, deren definierte Durchmesser ein Koaleszieren mit Öltropfen im Luft-Öl-Gemisch im Bereich der Lagerkammer begünstigen. Alternativ hierzu kann die Einrichtung zum Einleiten von Öl auch zur Einleitung eines im Wesentlichen kegelförmigen Ölfilms ausgeführt sein, um eine gewünscht gleichmäßige Beaufschlagung des Luft-Öl-Volumenstromes mit Öl zu erreichen.

Um einen besonders großen Teil der Öltropfen des in dem Leitungsbereich geführten Luft-Öl-Volumenstroms mit dem über die Einrichtung eingeleiteten Öl zu großen Öltropfen zu koaleszieren, ist bei einer vorteilhaften Ausführung der erfindungsgemäßen Tankvorrichtung vorgesehen, dass Öl über die Einrichtung zum Einleiten von Öl derart in den Leitungsbereich einleitbar ist, dass im Wesentlichen ein gesamter Querschnittsbereich des Leitungsbereichs mit Öl beaufschlagbar ist. Die Einrichtung zum Einleiten von Öl ist dabei vorzugsweise im Wesentlichen zentral, d. h. im Bereich einer Mittelachse des Leitungsbereichs angeordnet, wobei das Öl von der Einrichtung vorzugsweise in einem spitzen Winkel und weiter vorzugsweise nahezu parallel zu der Wandung des Leitungsbereichs in den Leitungsbereich appliziert wird.

Bei einer konstruktiv einfach umzusetzenden Ausführung der Erfindung ist die Abscheideeinrichtung als ein von einem Wandungsbereich begrenzter Zyklon ausgeführt, dem der Luft-Öl-Volumenstrom im Bereich der Einlasseinrichtung in im Wesentlichen tangentialer Richtung zuführbar ist. Im Bereich des Zyklons kann aus dem der Tankvorrichtung zugeführten Luft-Öl-Volumenstrom vorteilhafterweise bereits ein großer Anteil an Öl, insbesondere von großen Öltropfen, abgeschieden werden.

Wenn der vorzugsweise in einem Einbauzustand der Tankvorrichtung im Wesentlichen vertikal verlaufende Leitungsbereich im Wesentlichen im Bereich einer Mittelachse der von einem Wandungsbereich begrenzten Abscheideeinrichtung angeordnet ist, kann ein im Betrieb im Bereich der Mittelachse der Abscheideeinrichtung aufsteigender Volumenstrom auf einfache Weise direkt dem Leitungsbereich zugeführt werden.

Der im Bereich der Mittelachse der Abscheideeinrichtung angeordnete Leitungsbereich grenzt bei einer konstruktiv einfach ausgeführten Tankvorrichtung direkt an die Ventileinrichtung und verläuft vorzugsweise in einem Einbauzustand der Tankvorrichtung im Wesentlichen in vertikaler Richtung.

Um eine Abscheideleistung von Öl im Bereich der Tankvorrichtung weiter zu erhöhen, kann sich bezüglich einer sich im Betrieb ausbildenden Strömungsrichtung des Luft-Öl-Volumenstroms innerhalb des Leitungsbereichs stromab an den in einem Einbauzustand der Tankvorrichtung vorzugsweise im Wesentlichen vertikal verlaufenden Leitungsbereich ein Umlenkbereich anschließen. Durch die Umlenkung des Luft-Öl-Volumenstroms im Umlenkbereich um beispielsweise etwa 90° gegenüber der Bewegungsrichtung im Leitungsbereich werden weitere Öltropfen des Luft-Öl-Volumenstroms an einer Wandung des Umlenkbereichs abgeschieden. Bei einer derartigen Ausführung der Tankvorrichtung ist die Ventileinrichtung bzw. ist die Auslasseinrichtung insbesondere außermittig zu dem Leitungsbereich angeordnet. Der durch den Leitungsbereich und den im Einbauzustand der Tankvorrichtung vorzugsweise im Wesentlichen horizontal verlaufenden Umlenkbereich strömende Luft-Öl-Volumenstrom ist vorteilhafterweise vor einer Abführung aus dem Tankraum im Bereich der Auslasseinrichtung in einen nicht von den Wandungen des Leitungsbereichs und des Umlenkbereichs begrenzten, so genannten Expansionsraum der Tankvorrichtung einleitbar.

Bei einer vorteilhaften Ausführung der Tankvorrichtung, bei der ein Druck innerhalb der Tankvorrichtung auf einfache Weise einstellbar ist, ist die Ventileinrichtung als ein Druckbegrenzungsventil ausgeführt.

Um auch einen gegebenenfalls in dem aus der Tankvorrichtung abgeführten Volumenstrom enthaltenen Anteil von Öl vor einer Abführung des Volumenstroms aus dem Flugtriebwerk zumindest teilweise aus dem Volumenstrom abscheiden zu können, kann bei einem vorteilhaften Flugtriebwerk stromab der Auslasseinrichtung für den Volumenstrom aus der Tankvorrichtung ein Ölabscheider und/oder ein Zyklon angeordnet sein, dem der Volumenstrom direkt oder beispielsweise über einen Innenraum einer Nebenaggregategetriebeeinrichtung zuführbar ist.

Weitere Vorteile und vorteilhafte Ausführungsformen der erfindungsgemäßen Tankvorrichtung ergeben sich aus den Patentansprüchen und den nachfolgend unter Bezugnahme auf die Zeichnung prinzipmäßig beschriebenen Ausführungsbeispielen, wobei in der Beschreibung der verschiedenen Ausführungsbeispiele zugunsten der Übersichtlichkeit für bau- und funktionsgleiche Bauteile dieselben Bezugszeichen verwendet werden.

Es zeigt:
- Fig. 1a: eine stark schematisierte Längsschnittansicht eines Flugtriebwerkes mit einer im Bläsergehäuse angeordneten Nebenaggregategetriebeeinrichtung;
- Fig. 1b: eine Fig. 1a entsprechende Darstellung eines Flugtriebwerkes mit im Bereich des Triebwerkskerns montierter Nebenaggregategetriebeeinrichtung;
- Fig. 2: eine stark schematisierte Teildarstellung des Flugtriebwerks gemäß Fig. 1a bzw. Fig. 1b mit im Bereich der Nebenaggregategetriebeeinrichtung angeordneter Tankvorrichtung;
- Fig. 3: eine vereinfachte Schnittdarstellung der Tankvorrichtung der Fig. 2 in Alleinstellung; und
- Fig. 4: einen vereinfachte Schnittdarstellung einer alternativ ausgeführten Tankvorrichtung in Alleinstellung.

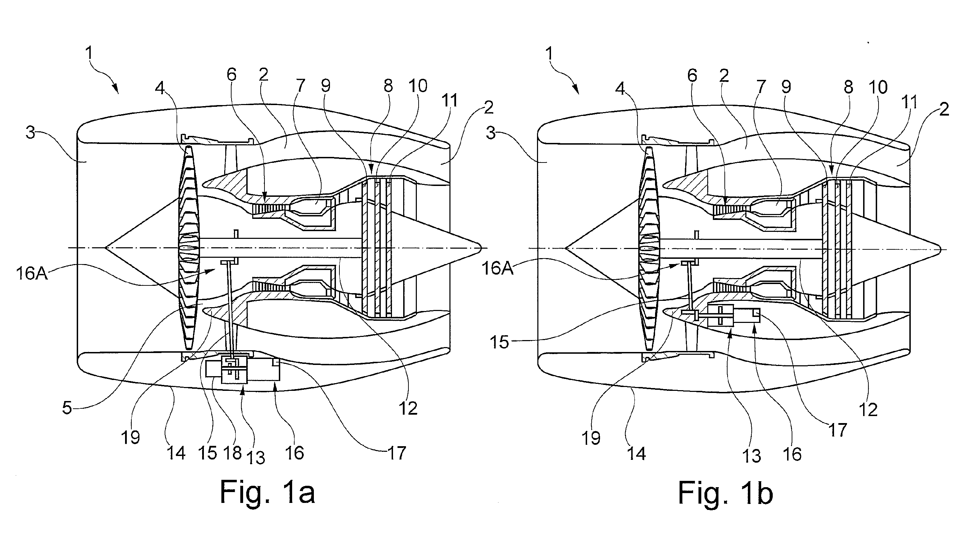

Fig. 1 a und Fig. 1b zeigen jeweils ein Flugtriebwerk bzw. Strahltriebwerk 1 in einer Längsschnittansicht. Das Flugtriebwerk 1 ist mit einem Nebenstromkanal 2 und einem Einlaufbereich 3 ausgebildet, wobei sich an den Einlaufbereich 3 stromab ein Bläser 4 in an sich bekannter Art und Weise anschließt. Wiederum stromab des Bläsers 4 teilt sich der Fluidstrom im Flugtriebwerk 1 in einen Nebenstrom und einen Kernstrom auf, wobei der Nebenstrom durch den Nebenstromkanal 2 und der Kernstrom in einen Triebwerkskern 5 strömt, der wiederum in an sich bekannter Art und Weise mit einer Verdichtereinrichtung 6, einem Brenner 7 und einer Turbineneinrichtung 8 ausgeführt ist.

Die Turbineneinrichtung 8 weist vorliegend drei Rotorvorrichtungen 9, 10 und 11 auf, welche in im Wesentlichen vergleichbarer Bauweise ausgebildet sind und mit einer Triebwerkswelle 12 verbunden sind.

Bei der Ausführung des Flugtriebwerks 1 gemäß Fig. 1a ist eine Nebenaggregategetriebeeinrichtung 13 in einem äußeren Triebwerksgehäuse 14 angeordnet, das den Nebenstromkanal 2 begrenzt und den äußeren Umfangsbereich des Strahltriebwerkes 1 darstellt. Die Nebenaggregategetriebeeinrichtung 13 ist vorliegend über eine in radialer Richtung des Stahltriebwerks 1 verlaufende Antriebswelle 15 über ein inneres Getriebe 16A mit der Triebwerkswelle 12 verbunden und wird somit von der Triebwerkswelle 12 im Betrieb des Stahltriebwerkes 1 angetrieben bzw. mit Drehmoment versorgt. Von der Nebenaggregategetriebeeinrichtung 13 werden verschiedene Nebenaggregate 16 und ein Ölabscheider 17, der auch als Breather bezeichnet wird, in gewünschtem Umfang mit Drehmoment beaufschlagt. Zusätzlich ist im Bereich der Nebenaggregategetriebeeinrichtung 13 auch eine Tankvorrichtung 18 vorgesehen, die ein Hydraulikfluidreservoir darstellt, aus dem Öl zur Kühlung und Schmierung verschiedener Bereiche des Flugtriebwerks 1, wie Lagereinrichtungen, Zahnradpaarungen des inneren Getriebes 16A und der Nebenaggregategetriebeeinrichtung 13 sowie weiterer zu kühlender und zu schmierender Baugruppen des Flugtriebwerkes 1, entnommen wird.

Im Unterschied hierzu ist die Nebenaggregategetriebeeinrichtung 13 mit den Nebenaggregaten 16 und dem Ölabscheider 17 bei der Ausführung des Flugtriebwerks 1 gemäß Fig. 1b in radialer Richtung zwischen dem Nebenstromkanal 2 und dem Triebwerkskern 5 in einem sowohl den Nebenstromkanal 2 als auch den Triebwerkskern 5 begrenzenden Bauteil 19 angeordnet.

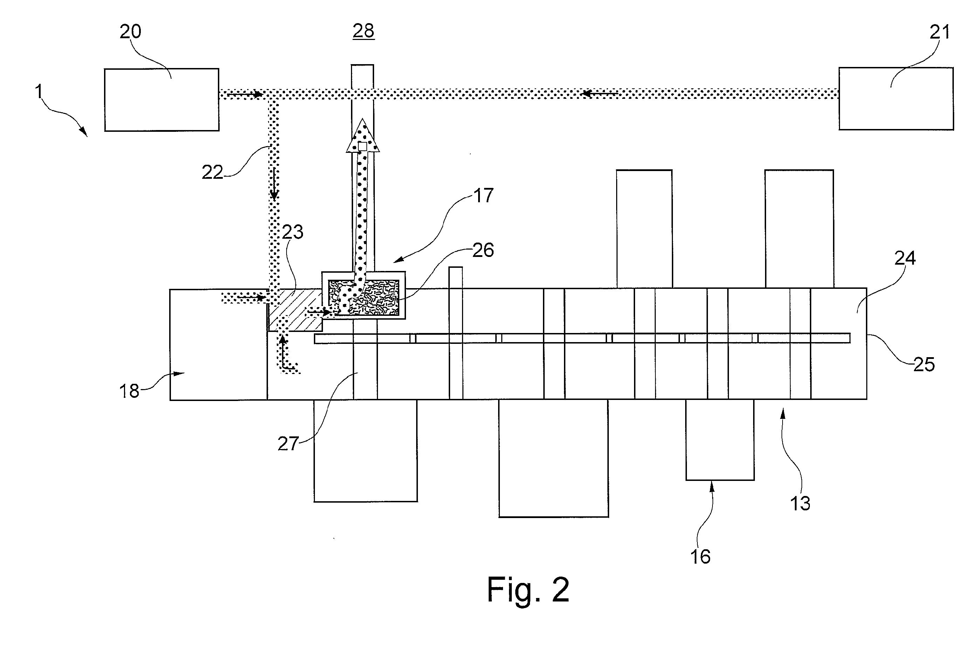

Fig. 2 zeigt eine Ausführungsform des Flugtriebwerks 1 gemäß Fig. 1a in stark schematisierter Form im Bereich der Nebenaggregategetriebeeinrichtung 13, der Nebenaggregate 16 und des Ölabscheiders 17, der vorliegend mit der Tankvorrichtung 18 und zwei weiteren Bereichen 20, 21 sowie einem Innenraum 24 eines Gehäuses 25 der Nebenaggregategetriebeeinrichtung 13 in Verbindung steht, die alle mit Öl beaufschlagten Bereiche des Flugtriebwerkes 1 darstellen. Die Bereiche 20, 21 stellen vorliegend Lagerkammern des Flugtriebwerkes 1 dar und werden im Betrieb des Flugtriebwerkes 1 mit Öl aus der Tankvorrichtung 18 zum Schmieren und Kühlen beaufschlagt. Dabei ist der Bereich 20 die Lagerkammer eines vorderen Lagers und der Bereich 21 die Lagerkammer eines hinteren Lagers des Flugtriebwerkes 1. Die nachfolgend zu Fig. 2 bis Fig. 4 näher beschriebenen Aspekte weist das Flugtriebwerk 1 gemäß Fig. 1b in im Wesentlich identischem Umfang auf.

Bei der in Fig. 2 gezeigten Ausführungsform des Flugtriebwerks 1 sind jeweils ein Luft-Öl-Volumenstrom aus der vorderen Lagerkammer 20 und der hinteren Lagerkammer 21 in Richtung eines Leitungsbereichs 22 führbar, der vorliegend in eine dem Ölabscheider 17 vorgeschaltete Vorkammer 23 mündet. Des Weiteren ist hier auch die Tankvorrichtung 18 mit der Vorkammer 23 verbunden, um einen Volumenstrom bzw. Luft-Öl-Volumenstrom aus der Tankvorrichtung 18 sowie die Luft-Öl-Volumenströme der Lagerkammern 20 und 21 über den Leitungsbereich 22 tangential in die Vorkammer 23 einleiten zu können. Alternativ hierzu kann es auch vorgesehen sein, dass der Luft-Öl-Volumenstrom aus der Tankvorrichtung 18 direkt dem Ölabscheider 17 zugeführt wird.

Bei der gezeigten Ausführung ist auch ein Innenraum 24 eines Gehäuses 25 der Nebenaggregategetriebeeinrichtung 13 mit der Vorkammer 23 gekoppelt, wobei bei einer entsprechenden Bedruckung des Innenraums 24 ebenfalls ein Luft-Öl-Volumenstrom aus dem Gehäuse 25 der Nebenaggregategetriebeeinrichtung 13 tangential in die Vorkammer 23 eingeleitet wird. Die Vorkammer 23 ist mit dem Ölabscheider 17 verbunden, in dessen Innenraum ein poröser Bereich 26 drehbar angeordnet ist, der von dem aus der Vorkammer 23 ausströmenden Luft-Öl-Volumenstrom durchströmbar ist.

Der poröse Bereich 26 ist vorliegend über ein Zahnrad 27 von der Nebenaggregategetriebeeinrichtung 13 antreibbar und wirkt als Zentrifuge, um den Anteil an Öl des durch den porösen Bereich 26 strömenden Luft-Öl-Volumenstroms soweit als möglich reduzieren zu können. Dabei wird der Ölanteil des Luft-Öl-Volumenstroms im Ölabscheider 17 im Bereich des porösen Bereichs 26 einerseits wie beim Durchströmen eines Prallfilters und andererseits wie im Bereich einer Zentrifuge durch die Rotation des porösen Bereichs 26 durch Abscheiden des Öls aus dem Luft-Öl-Volumenstrom reduziert. Das im Bereich des porösen Bereichs 26 aus dem Luft-Öl-Volumenstrom ausgefilterte Öl wird im äußeren Bereich des Ölabscheiders 17 in nicht näher dargestellter Art und Weise über eine Pumpeneinrichtung abgesaugt und zurück in die Tankvorrichtung 18 geführt. Der aus dem Ölabscheider 17 in Richtung der Umgebung 28 ausströmende Luftstrom weist eine sehr geringe Beladung an Öl auf, so dass im Betrieb des Flugtriebwerks 1 keine von außen sichtbare Rauchfahne entsteht.

Im Bereich des Ölabscheiders 17 können Öltropfen mit einem sehr kleinen Durchmesser im Bereich von etwa 1 pm nur in begrenztem Umfang abgeschieden werden. Allerdings kann der jeweils aus bekannten Tankvorrichtungen abgeführte Volumenstrom einen großen Anteil derartiger kleiner Öltropfen enthalten.

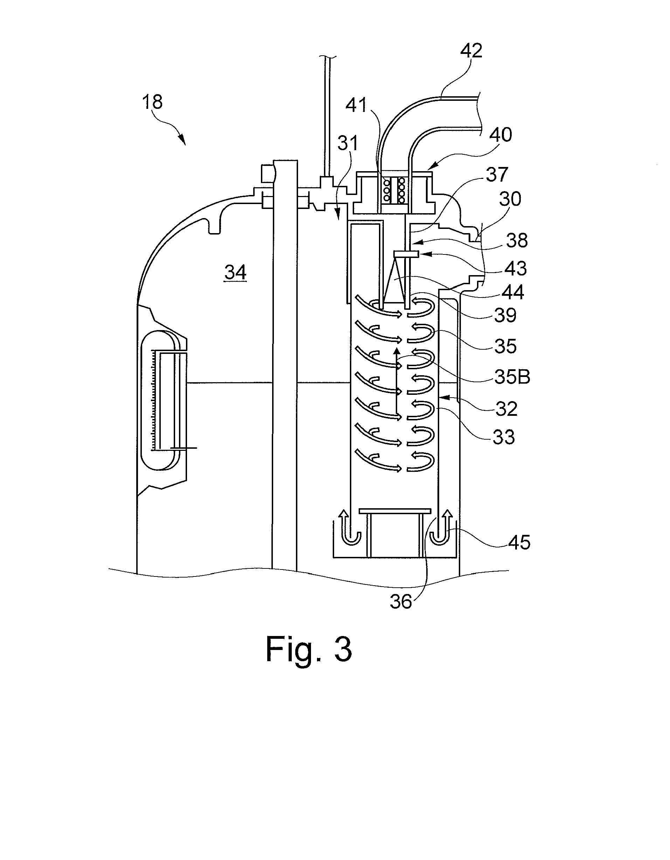

Ein bevorzugtes Ausführungsbeispiel der erfindungsgemäßen Tankvorrichtung 18 zeigt Fig. 3, bei der ein Anteil kleiner Öltropfen des aus der Tankvorrichtung 18 abgeführten Volumenstroms gegenüber bekannten Ausführungen reduziert ist. Die Tankvorrichtung 18 gemäß Fig. 3 weist eine Einlasseinrichtung 30 auf, über die der Tankvorrichtung 18 ein Luft-Öl-Volumenstrom aus einem mit Öl beaufschlagten Bereich des Flugtriebwerks 1 zuführbar ist. Der Luft-Öl-Volumenstrom wird innerhalb eines Tankraums 31 der Tankvorrichtung 18, in dem üblicherweise ein Druck von etwa 1 bar vorliegt, einer hier als Zyklon ausgeführten Abscheideeinrichtung 32 zugeführt. Der Zyklon 32 weist dabei einen vorliegend im Wesentlichen zylindrischen Wandungsbereich 33 auf, über den der Zyklon 32 zumindest bereichsweise von einem Expansionsraum 34 der Tankvorrichtung 18 getrennt ist. Der Luft-Öl-Volumenstrom wird außermittig und tangential zu dem Wandungsbereich 33 in einem im Einbauzustand der Tankvorrichtung 18 oberen Bereich des Zyklons 32 in diesen eingeleitet. Ausgehend von der Einlasseinrichtung 30 strömt der Luft-Öl-Volumenstrom im Bereich des Zyklons 32 spiralförmig entsprechend des Pfeils 35 entlang des Wandungsbereichs 33 des Zyklons nach unten. Aufgrund der dabei wirkenden Zentrifugalkraft scheiden sich insbesondere große schwere Öltropfen des Luft-Öl-Volumenstroms an dem Wandungsbereich 33 des Zyklons 32 ab und bilden dort einen Ölfilm. Der Ölfilm strömt aufgrund der Schwerkraft entlang des Wandungsbereichs 33 nach unten und fließt über eine Auslassöffnung 36 des Zyklons 32 in Richtung der Pfeile 45 in ein Ölreservoir der Tankvorrichtung 18 ab.

Durch die im Bereich des Zyklons 32 vorliegenden dynamischen Verhältnisse steigt im Bereich einer Mittelachse des Zyklons 32 in Richtung des Pfeils 35B ein Luft-Öl-Volumenstrom im Zyklon 32 auf. In diesem Luft-Öl-Volumenstrom werden insbesondere im Bereich des Zyklons 32 nicht abgeschiedene kleine Öltropfen sowie aus dem spiralförmig im Zyklon 32 nach unten strömenden Luft-Öl-Volumenstrom übergehende Öltropfen verschiedener Größen mitgeführt. Der in Richtung des Pfeils 35B in dem Zyklon 32 aufsteigende Luft-Öl-Volumenstrom wird vorliegend in einem oberen etwa auf Höhe der Einlasseinrichtung 30 liegenden Bereich einem von einer Wandung 37 begrenzten, vorliegend zylinderförmig ausgeführten Leitungsbereich 38 zugeführt, dessen Mittelachse vorliegend im Wesentlichen deckungsgleich zu der Mittelachse des Zyklons 32 angeordnet ist und somit in Einbaulage der Tankvorrichtung 18 im Wesentlichen in vertikaler Richtung verläuft. Auf einer einer Einlassöffnung 39 des Leitungsbereichs 38 abgewandten Seite des Leitungsbereichs 38 grenzt dieser im Bereich einer Auslasseinrichtung 40 der Tankvorrichtung 18 an eine vorliegend als federvorgespanntes Druckbegrenzungsventil 41 bzw. Druckreduzierventil ausgeführte Ventileinrichtung, über die ein mit der Tankvorrichtung 18 ausgeführtes Triebwerksölsystem eines Flugzeugs auch bei großen Flughöhen des Flugzeugs mit Druck beaufschlagbar ist. Stromab des Druckbegrenzungsventils 41 wird ein Volumenstrom einer Leitung 42 zugeführt, die vorliegend mit der Vorkammer 23 verbunden ist.

Bezüglich einer sich im Betrieb des Flugtriebwerks 1 innerhalb des Leitungsbereichs 38 einstellenden Strömungsrichtung des Luft-Öl-Volumenstroms ist vorliegend stromab der Einlassöffnung 39 des Leitungsbereichs 38 innerhalb der Wandung 37 des Leitungsbereichs 38 eine mit der Wandung 37 verbundene Einrichtung 43 zum Einleiten von Öl vorgesehen, über die in den durch die Einlassöffnung 39 strömenden Luft-Öl-Volumenstrom Öl einleitbar ist.

Mit der Einrichtung 43 zum Einleiten von Öl ist Öl vorliegend in Form eines in Fig. 3 schematisch dargestellten Sprühkegels 44 oder in Form eines kegelförmigen Ölfilms über eine nicht näher ersichtliche, in einem bezüglich der Mittelachse mittigen Bereich des Leitungsbereichs 38 angeordnete Austrittsöffnung der Einrichtung 43 in den Leitungsbereich 38 einleitbar. Um einen möglichst zielgerichteten Sprühkegel 44 ausbilden zu können, wird Öl über die Einrichtung 43 zum Einleiten von Öl mit einem Druck von beispielsweise 3 bar bis 12 bar, insbesondere 4 bar bis 9 bar, in den Leitungsbereich 38 eingeleitet. Dabei ist ein über den Ölsprühkegel 44 der Einrichtung 43 in Längsrichtung des Leitungsbereichs 38 mit Öl beaufschlagbarer Bereich umso größer, je größer die Druckdifferenz zwischen dem Zuführdruck des über die Einrichtung 38 eingeleiteten Öls und dem Druck in dem Tankraum 31 ist. Zudem bildet sich der Ölsprühkegel 44 bei großer Druckdifferenz auch bei vorliegenden Verwirbelungen des Luft-Öl-Volumenstroms sehr stabil aus.

Über die Einrichtung 38 zum Einleiten von Öl ist der Sprühkegel 44 vorzugsweise derart ausbildbar, dass Öl vorzugsweise in einem spitzen Winkel auf die Wandung 37 des Leitungsbereichs 38 leitbar ist, wobei insbesondere ein gesamter Querschnittsbereich des Leitungsbereichs 38 von dem Sprühkegel 44 erfasst ist. Entsprechend wird durch den Sprühkegel 44 der gesamte, den Leitungsbereich 38 durch die Einlassöffnung 39 durchströmende Luft-Öl-Volumenstrom mit Öl beaufschlagt. Dadurch wird erreicht, dass sich ein großer Teil der Öltropfen des Luft-Öl-Volumenstroms, vorzugsweise sämtliche Öltropfen des Luft-Öl-Volumenstroms, mit dem Öl der Einrichtung 43 zum Einleiten von Öl zu größeren Öltropfen vereinigt bzw. koalesziert. Bei einer Vereinigung der Öltropfen werden die Öltropfen des Luft-Öl-Volumenstroms hier um etwa 180° umgelenkt, wobei unterstützt durch die Wirkung von Zentrifugalkräften und der Schwerkraft die großen Öltropfen vorzugsweise nach unten, in einer der Auslasseinrichtung 40 abgewandten Richtung und dem Luft-Öl-Volumenstrom entgegengesetzt strömen und sich aus diesem abscheiden.

Alternativ hierzu kann die Einrichtung zum Einleiten von Öl auch derart ausgeführt sein, dass mit der Einrichtung ein gesamter Querschnittsbereich des Wandungsbereichs des Zyklons mit Öl beaufschlagbar ist, wobei eine derartige Einrichtung dieselbe Wirkungsweise wie die oben näher beschriebenen Einrichtung 38 aufweist.

Das Koaleszieren der Öltropfen des Luft-Öl-Volumenstromes mit dem eingeleiteten Öl wird durch die jeweils vorliegenden Anziehungskräfte zwischen den einzelnen Öltropfen begünstigt, wobei sich das Bestreben der Öltropfen, sich zu größeren Öltropfen zu vereinen, mit steigendem Verhältnis zwischen den Durchmessern der Öltropfen vergrößert. Die Neigung der Öltropfen des über die Einrichtung 43 eingeleiteten bzw. eingesprühten Öls zum Koaleszieren mit den Öltropfen im Bereich des Leitungsbereichs 38 kann zusätzlich dadurch erhöht werden, dass das eingeleitete Öl eine gegenüber dem dem Leitungsbereich 38 zugeführten Luft-Öl-Volumenstrom deutlich reduzierte Temperatur aufweist. Zudem wird die Vereinigung der Öltropfen des Luft-Öl-Volumenstroms in dem Leitungsbereich 38 mit dem durch die Einrichtung 43 in den Leitungsbereich 38 eingeleiteten Öl durch eine große Relativgeschwindigkeit zwischen dem Luft-Öl-Volumenstrom in dem Leitungsbereich 38 und dem von der Einrichtung 43 eingeleiteten Öl verbessert.

Die großen Öltropfen, die sich durch eine Vereinigung des Öls aus dem Luft-Öl-Volumenstrom und dem über die Einrichtung 43 eingeleiteten Öl bilden, neigen zur Abscheidung an einem Ölfilm, der sich im Betrieb des Flugtriebwerks 1 zumindest bereichsweise an der Wandung 37 des Leitungsbereichs 38 bildet, wobei Öl des Ölfilms über die Schwerkraft in Richtung der Auslassöffnung 36 des Zyklons 32 befördert und von dort dem Hydraulikreservoir der Tankvorrichtung 18 zugeführt wird.

Der stromab der Einrichtung 43 in dem Leitungsbereich 38 dem Druckbe-grenzungsventil 41 zugeführte Volumenstrom weist vorteilhafterweise lediglich eine sehr geringe oder gar keine Beladung mit Öl auf, so dass im Bereich des Druckbe-grenzungsventils 41 durch dessen dynamisches Verhalten, das im Betrieb des Flugtriebwerks 1 schnell aufeinanderfolgende Öffnungs- und Schließvorgänge ausführt, keine oder lediglich eine sehr geringe Anzahl von kleinen Öltropfen aus großen Öltropfen des Volumenstroms gebildet werden. Der der Vorkammer 23 stromab der Auslasseinrichtung 40 der Tankvorrichtung 18 über die Leitung 42 zugeführte Volumenstrom weist somit gegenüber bekannten Ausführungen der Tankvorrichtung eine stark reduzierte Ölbeladung mit einem geringen Anteil kleiner Öltropfen auf.

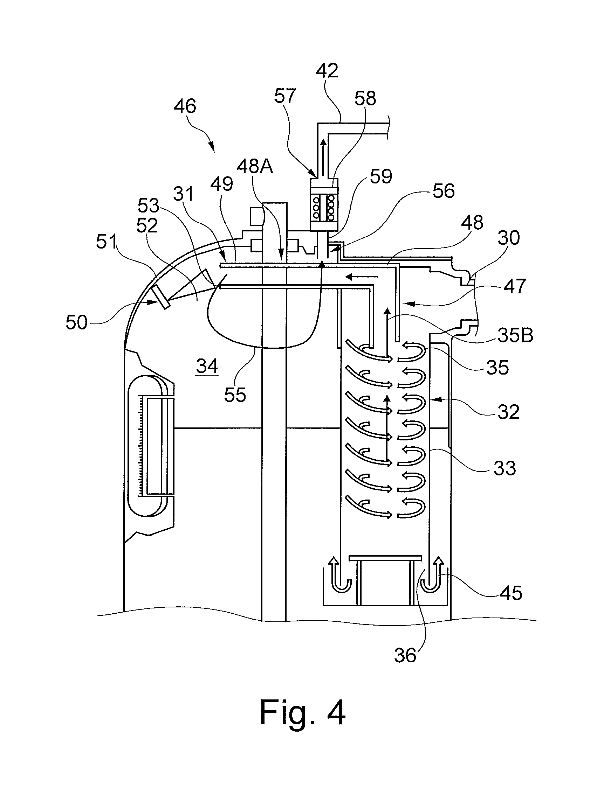

Fig. 4 zeigt eine alternativ zu der Tankvorrichtung 18 gemäß Fig. 3 ausgeführte Tankvorrichtung 46. Da die Tankvorrichtung 46 einen grundsätzlich vergleichbaren Aufbau wie die Tankvorrichtung 18 hat, wird im Folgenden lediglich auf die Unterschiede zu der Tankvorrichtung 18 eingegangen und bezüglich der weiteren Funktionsweise der Tankvorrichtung 46 auf die vorstehende Beschreibung zu Fig. 3 verwiesen.

Über einen Leitungsbereich 47 der Tankvorrichtung 46 wird der aufsteigende Luft-Öl-Volumenstrom im Zyklon 32 im Unterschied zu dem Leitungsbereich 38 der Tankvorrichtung 18 nicht direkt der Ventileinrichtung 41 zugeführt. Der Leitungsbereich 47 ist mit einem Umlenkbereich 48 und einem sich daran anschließenden, sowie im Einbauzustand der Tankvorrichtung 46 im Wesentlichen horizontal verlaufenen Leitungsbereich 48A verbunden, der in den Expansionsraum 34 der Tankvorrichtung 46 mündet. Durch die Umlenkung des dem Leitungsbereich 47 zugeführten Luft-Öl-Volumenstroms im Umlenkbereich 48 wird eine zusätzliche Abscheidung von insbesondere großen Öltropfen aus dem Luft-Öl-Volumenstrom erreicht. Diese Öltropfen werden auch durch die Schwerkraft an einer Wandung 49 des Umlenkbereichs 48 bzw. des Leitungsbereichs 48A abgeschieden und bilden dort einen Öl-film, der wiederum in das Hydraulikfluidreservoir der Tankvorrichtung 46 abfließt.

Die Tankvorrichtung 46 weist eine Einrichtung 50 zum Einleiten von Öl auf, die bei der Ausführung gemäß Fig. 4 vorliegend an einer äußeren Wand bzw. Außenwand 51 der Tankvorrichtung 46 und somit außerhalb eines von den Leitungsbereichen 47, 48A und dem Umlenkbereich 48 begrenzten Raums angeordnet ist. Die Einrichtung 50 zum Einleiten von Öl ist im Wesentlichen vergleichbar zu der Einrichtung 43 zum Einleiten von Öl ausgeführt. Ein Sprühkegel 52 der Einrichtung 50 zum Einleiten von Öl ist derart in Richtung einer Auslassöffnung 53 des Leitungsbereichs 48A gerichtet, dass der gesamte die Auslassöffnung 53 des Leitungsbereichs 48A durchströmende Luft-Öl-Volumenstrom von der Einrichtung 50 zum Einleiten von Öl mit Öl beaufschlagbar ist. Die durch das Koaleszieren zwischen dem über die Einrichtung 50 eingeleiteten Öl und der Öltropfen des Luft-Öl-Volumenstroms gebildeten großen Öltropfen werden durch das über die Einrichtung 50 eingeleitete Öl um annähernd 180° umgelenkt und dadurch in gewünschtem Umfang gegen die Wandung 49 des Umlenkbereichs 48 bzw. des Leitungsbereichs 48A gedrückt, wobei sich die großen Öltropfen beim Auftreffen auf der Wandung 49 mit einem sich im Betrieb des Flugtriebwerks 1 an der Wandung 49 des Umlenkbereichs 48 bzw. des Leitungsbereichs 48A ausbildenden Ölfilms abscheiden. Der durch die Auslassöffnung 53 des Leitungsbereichs 48A in den Expansionsraum 34 eingeleitete Luft-Öl-Volumenstrom strömt, wie durch den Pfeil 55 exemplarisch gezeigt ist, durch den Expansionsraum 34 in Richtung eines weiteren Leitungsbereichs 56. Der dem weiteren Leitungsbereich 56 zugeführte Volumenstrom wird, wie bei der Tankvorrichtung 18 näher beschrieben, im Bereich einer Auslasseinrichtung 57 der Tankvorrichtung 46 über eine als Druckbegrenzungsventil 58 ausgeführte Ventileinrichtung in Richtung der Vorkammer 23 geführt.

Bei der Tankvorrichtung 46 gemäß Fig. 3 wird wie bei der Tankvorrichtung 18 mittels der Einrichtung 50 zum Einleiten von Öl aus dem Luft-Öl-Volumenstrom Öl in einem derartigen Umfang abgeschieden, so dass der die Tankvorrichtung 46 durch die Auslasseinrichtung 57 abströmende Volumenstrom eine sehr geringe Ölmenge ausführt oder im besten Fall die Tankvorrichtung als ölfreier Luftstrom verlässt.

Bei der Tankvorrichtung 46 kann zusätzlich oder anstatt der Einrichtung 50 zum Einleiten von Öl eine weitere, nicht näher gezeigte Einrichtung zum Einleiten von Öl innerhalb einer von dem weiteren Leitungsbereich 56 begrenzten Wandung 59 angeordnet sein, wobei bezüglich deren Wirkungsweise wiederum auf die Ausführungen zu der Einrichtung 43 zum Einleiten von Öl in den Leitungsbereich 38 verwiesen wird.

### Bezugszeichenliste

- 1: Flugtriebwerk, Strahltriebwerk
- 2: Nebenstromkanal
- 3: Einlaufbereich
- 4: Bläser
- 5: Triebwerkskern
- 6: Verdichtereinrichtung
- 7: Brenner
- 8: Turbineneinrichtung
- 9, 10, 11: Rotorvorrichtung
- 12: Triebwerkswelle
- 13: Nebenaggregategetriebeeinrichtung
- 14: Triebwerksgehäuse
- 15: Antriebswelle
- 16: Nebenaggregate
- 16A: inneres Getriebe
- 17: Ölabscheider
- 18: Tankvorrichtung
- 20: Bereich, vordere Lagerkammer
- 21: Bereich, hintere Lagerkammer
- 22: Leitungsbereich
- 23: Vorkammer
- 24: Innenraum der Nebenaggregategetriebeeinrichtung
- 25: Gehäuse der Nebenaggregategetriebeeinrichtung
- 26: poröser Bereich des Ölabscheiders
- 27: Zahnrad
- 28: Umgebung
- 30: Einlasseinrichtung
- 31: Tankraum der Tankvorrichtung
- 32: Abscheideeinrichtung, Zyklon
- 33: Wandungsbereich der Abscheideeinrichtung
- 34: Expansionsraum der Tankvorrichtung
- 35, 35B: Pfeil
- 36: Auslassöffnung des Zyklons
- 37: Wandung des Leitungsbereichs
- 38: Leitungsbereich
- 39: Einlassöffnung des Leitungsbereichs
- 40: Auslasseinrichtung der Tankvorrichtung
- 41: Ventileinrichtung, Druckbegrenzungsventil
- 42: Leitung
- 43: Einrichtung zum Einleiten von Öl
- 44: Sprühkegel
- 45: Pfeile
- 46: Tankvorrichtung
- 47: Leitungsbereich
- 48: Umlenkbereich
- 48A: Leitungsbereich
- 49: Wandung des Umlenkbereichs bzw. des Leitungsbereichs
- 50: Einrichtung zum Einleiten von Öl
- 51: Außenwand der Tankvorrichtung
- 52: Sprühkegel
- 53: Auslassöffnung des Leitungsbereichs
- 55: Pfeil
- 56: weiterer Leitungsbereich
- 57: Auslasseinrichtung der Tankvorrichtung
- 58: Ventileinrichtung, Druckbegrenzungsventil
- 59: Wandung des weiteren Leitungsbereichs

## Patentansprüche

1. Tankvorrichtung (18; 46) eines Flugtriebwerks (1), welche eine Einlasseinrichtung (30) zur Zuführung eines Luft-Öl-Volumenstroms in einen Tankraum (31) der Tankvorrichtung (18; 46), eine Abscheideeinrichtung (32) zur Abscheidung von Öl aus dem dem Tankraum (31) zugeführten Luft-Öl-Volumenstrom, einen von wenigstens einer Wandung (37; 49, 59) begrenzten Leitungsbereich (38; 47, 48, 48A, 56), in welchem ein Luft-Öl-Volumenstrom im Bereich des Tankraums (31) zumindest bereichsweise führbar ist, und eine Auslasseinrichtung (40; 57) aufweist, in deren Bereich ein Volumenstrom über eine Ventileinrichtung (41; 58) aus dem Tankraum (31) der Tankvorrichtung (18; 46) abführbar ist, **dadurch gekennzeichnet, dass** wenigstens eine Einrichtung (43; 50) zum Einleiten von Öl vorgesehen ist, mittels welcher Öl im Wesentlichen entgegen einer sich im Betrieb ausbildenden Strömungsrichtung des Luft-Öl-Volumenstroms in dem Leitungsbereich (38; 47, 48, 48A, 56) im Bereich des Leitungsbereichs (38; 47, 48, 48A, 56) einleitbar ist.

2. Tankvorrichtung nach Anspruch 1, **dadurch gekennzeichnet, dass** die Einrichtung (43) zum Einleiten von Öl innerhalb der wenigstens einen Wandung (37) des Leitungsbereichs (38) angeordnet ist.

3. Tankvorrichtung nach einem der Ansprüche 1 oder 2, **dadurch gekennzeichnet, dass** die Einrichtung (50) zum Einleiten von Öl außerhalb der wenigstens einen Wandung (49) des Leitungsbereichs (47) angeordnet ist und Öl über die Einrichtung (50) zum Einleiten von Öl in Richtung einer Auslassöffnung (53) des Leitungsbereiches (47) einleitbar ist.

4. Tankvorrichtung nach Anspruch 3, **dadurch gekennzeichnet, dass** die Einrichtung (50) zum Einleiten von Öl an einer äußeren Wand (51) des Tankraums (31) angeordnet ist.

5. Tankvorrichtung nach einem der Ansprüche 1 bis 4, **dadurch gekennzeichnet, dass** der Leitungsbereich (38; 47, 48, 56) wenigstens abschnittsweise wenigstens annähernd zylinderförmig ausgeführt ist.

6. Tankvorrichtung nach einem der Ansprüche 1 bis 5, **dadurch gekennzeichnet, dass** der Leitungsbereich (38; 47, 56) im Einbauzustand der Tankvorrichtung (18; 46) zur Führung des sich im Betrieb ausbildenden Luft-Öl-Volumenstrom im Wesentlichen in vertikaler Richtung ausgeführt ist.

7. Tankvorrichtung nach einem der Ansprüche 1 bis 6, **dadurch gekennzeichnet, dass** das Öl über die Einrichtung (43; 50) zum Einleiten von Öl in Form eines Sprühkegels (44; 52) einleitbar ist.

8. Tankvorrichtung nach einem der Ansprüche 1 bis 7, **dadurch gekennzeichnet, dass** Öl über die Einrichtung (43; 50) zum Einleiten von Öl derart in den Leitungsbereich (38; 48, 48A) einleitbar ist, dass zumindest bereichsweise im Wesentlichen ein gesamter Querschnittsbereich des Leitungsbereichs (38; 48, 48A) mit Öl beaufschlagbar ist.

9. Tankvorrichtung nach einem der Ansprüche 1 bis 8, **dadurch gekennzeichnet, dass** die Abscheideeinrichtung (32) als ein von einem Wandungsbereich (33) begrenzter Zyklon ausgeführt ist, dem der Luft-Öl-Volumenstrom im Bereich der Einlasseinrichtung (30) in im Wesentlichen tangentialer Richtung zuführbar ist.

10. Tankvorrichtung nach einem der Ansprüche 1 bis 9, **dadurch gekennzeichnet, dass** der Leitungsbereich (38) im Wesentlichen im Bereich einer Mittelachse der von einem Wandungsbereich (33) begrenzten Abscheideeinrichtung (32) angeordnet ist.

11. Tankvorrichtung nach Anspruch 10, **dadurch gekennzeichnet, dass** der im Bereich der Mittelachse der Abscheideeinrichtung (32) angeordnete Leitungsbereich (38) direkt an die Ventileinrichtung (41; 58) grenzt.

12. Tankvorrichtung nach einem der Ansprüche 1 bis 11, **dadurch gekennzeichnet, dass** sich bezüglich einer sich im Betrieb ausbildenden Strömungsrichtung des Luft-Öl-Volumenstroms innerhalb des Leitungsbereichs (47) stromab an den Leitungsbereich (47) ein Umlenkbereich (48) anschließt.

13. Tankvorrichtung nach einem der Ansprüche 1 bis 12, **dadurch gekennzeichnet, dass** die Ventileinrichtung (41; 58) als ein Druckbegrenzungsventil ausgeführt ist.
